# EUROPÄISCHE PATENTSCHRIFT

(11) **EP 2 429 869 B1**
(45) Veröffentlichungstag und Bekanntmachung des Hinweises auf die Patenterteilung: **10.04.2013**
(21) Anmeldenummer: 11702391.1
(22) Anmeldetag: 20.01.2011
(51) Int. Cl.: B60T 1/06, B60T 10/02

(54) **VERFAHREN ZUM UMRÜSTEN ODER HERSTELLEN EINES ANTRIEBSSTRANGES UND HYDRODYNAMISCHER RETARDER**
METHOD FOR RETROFITTING OR PRODUCING A DRIVE TRAIN AND HYDRODYNAMIC RETARDER
PROCÉDÉ DE TRANSFORMATION OU DE FABRICATION D'UNE CHAÎNE CINÉMATIQUE ET RALENTISSEUR HYDRODYNAMIQUE

(30) Priorität: 22.01.2010 DE 102010005579
(43) Veröffentlichungstag der Anmeldung: 21.03.2012
(73) Patentinhaber: Voith Patent GmbH, 89522 Heidenheim (DE)
(72) Erfinder: BOEHNISCH, Jürgen, 74564 Crailsheim (DE); JAEGER, Martin, 74597 Randenweiler (DE)
(74) Vertreter: Schmidt, Sven Hendrik
(86) Internationale Anmeldenummer: PCT/EP2011/000213
(87) Internationale Veröffentlichungsnummer: WO 2011/089001

(56) Entgegenhaltungen:
- EP-A1- 2 165 871
- DE-A1- 3 738 856
- DE-A1- 4 026 251

## Beschreibung

Die vorliegende Erfindung betrifft ein Verfahren zum Umrüsten oder Herstellen eines Antriebsstranges, der zur Aufnahme einer Dauerbremse zur Verzögerung von im Antriebsstrang angeordneten Antriebsrädern oder Aggregaten ausgeführt ist, sowie einen Antriebsstrang mit einem hydrodynamischen Retarder.

Verschleißfreie Dauerbremsen in Antriebssträngen, insbesondere Kraftfahrzeugantriebssträngen, sind seit vielen Jahrzehnten bekannt und dienen zur Entlastung der zusätzlich vorgesehenen herkömmlichen verschließbehafteten Betriebsbremse eines Fahrzeugs oder einer stationären Anlage, insbesondere bei länger anhaltenden Bremsvorgängen, wie z.B. bei einer Bergabfahrt mit einem Fahrzeug. Dauerbremsen können hierbei als hydrodynamische Retarder, deren Arbeitsmedium Wasser, Öl oder ein Wassergemisch ist, als Luftretarder, als Wirbelstrombremsen, als Motorbremsen, insbesondere Motorstaubremsen oder als eine andere Art von Rekuperatoren, die kindetische oder potentielle Energie in eine andere Energieform umwandeln, ausgeführt sein.

Hydrodynamische Retarder weisen einen Arbeitsraum auf, der mit einem Arbeitsmedium befüllt oder befüllbar ist, um Drehmoment von einem angetriebenen Primärschaufelrad (Rotor) auf ein stationäres Sekundärschaufelrad, deshalb auch Stator genannt, hydrodynamisch zu übertragen. Anstelle eines stationären Sekundärschaufelrades kann auch ein entgegen dem Drehsinn des Primärschaufelrades umlaufendes Sekundärschaufelrad vorgesehen sein, um einen Gegenlaufretarder auszubilden. Durch Antreiben des Rotors mittels einer abzubremsenden Welle, beispielsweise einer Getriebeausgangswelle oder einer indirekt mit den Antriebsrädern eines Fahrzeugs drehfest verbundenen Welle (Gelenkwelle), wird das Arbeitsmedium im Rotor radial nach außen beschleunigt und tritt in den Stator ein, in welchem es radial nach innen strömend verzögert wird. Durch die derart ausgebildete Kreislaufströmung wird Drehmoment - hier als Bremsmoment des Retarders bezeichnet - vom Rotor auf den Stator übertragen. Dabei wird das Primärschaufelrad verzögert und insbesondere die mit dem Rotor drehfest ausgeführte Welle abgebremst.

Hinsichtlich der Einbaulage der Dauerbremse im Antriebsstrang ist eine Vielzahl von Möglichkeiten bekannt. Die Einbaulage hängt im Wesentlichen von der Bauraumsituation des Antriebsstranges, der Leistung der Dauerbremse und der Abmessungen dieser ab. In Kraftfahrzeugen, wie zum Beispiel Lastkraftwagen, Bussen oder Schienenfahrzeugen, werden derartige hydrodynamische Retarder in der Regel auf der Primärseite des Getriebes, innerhalb des Getriebes (Schaltgetriebe oder Automatgetriebe) im Hauptzweig oder einem Nebenzweig oder in einer Triebverbindung zwischen einer Getriebeabtriebsseite (Sekundärseite) eines Getriebes und den Fahrzeugrädern und hier im Hauptzweig angeordnet. In stationären Anlagen kann der als Dauerbremse ausgeführte -hydrodynamische Retarder zwischen der Getriebeabtriebswelle und der Welle, die mit dem anzutreibenden Aggregat umläuft, angeordnet sein, um diese Welle bei aktiviertem Retarder zu verzögern.

Derartige hydrodynamische Retarder sind in einer großen Vielfalt auf dem Markt erhältlich. Zwar folgen sie im Wesentlichen demselben hydrodynamischen Funktionsprinzip, unterscheiden sich jedoch von Hersteller zu Hersteller hinsichtlich ihrer Leistung und damit in ihrer Baugröße. Denn je größer die Schaufelräder und der Durchmesser des Arbeitsraumes, den diese einschließen, desto größer ist die Bremsleistung dieser Dauerbremsen. Neben dem Einbauort unterscheiden sich derartige Dauerbremsen auch in ihrer mechanischen Anbindung an den Antriebsstrang. Somit muss beim Ersatz einer defekten Dauerbremse häufig aufgrund der vorgegebenen Einbausituation bedingt durch die meist engen Raumverhältnisse im Antriebsstrang auch die äußere Gestalt der Dauerbremse entsprechend an die zu ersetzende Dauerbremse angepasst werden. Weiterhin sind insbesondere bei hydrodynamischen Retardern einzelne Funktionen, wie zum Beispiel die Befüllung und Entleerung sowie die Leistungsregelung, von Antriebsstrang zu Antriebsstrang und von Hersteller zu Hersteller unterschiedlich. Zur Leistungsbeeinflussung kann z.B. die im Arbeitsraum ausgebildete Kreislaufströmung mit verschiedenen Mitteln druckbeaufschlagt werden oder eine Zulauf- oder Ablaufregelung für Arbeitsmedium in den beziehungsweise aus dem Arbeitsraum vorgesehen werden.

Auch wenn sich einige Komponenten ähnlich sind, verwendet jeder Hersteller verschiedene Baueinheiten bezüglich Sensorik und Aktorik, sodass die dazu benötigten Schnittstellen sowie Leitungen jeweils anders ausfallen. Auch unterscheiden sich in der Regel die Kreislaufprofile verschiedener Hersteller voneinander.

Eine derart hohe Vielfalt bringt jedoch Nachteile mit sich. Aufgrund der verschiedenen Schnittstellen, mechanischen Anbindungen und unterschiedlich gestalteten Funktionen, ist ein Auswechseln eines Retarders eines bestimmten Herstellers gegen einen Retarder eines anderen Herstellers ohne Umarbeiten des einzusetzenden Retarders selten möglich. Ist ein solcher Austausch gewünscht, so führt dieser zu Sonderanfertigungen und Einzellösungen, in denen der einzusetzende Retarder an die Gegebenheiten des bestehenden Antriebsstranges angepasst werden muss. Derartige Sonderlösungen erhöhen jedoch im Allgemeinen die Bauteilvielfalt und -komplexität. Neben der bereits beträchtlichen Variantenvielfalt aufgrund verschiedener Leistungsklassen, die bereitgestellt werden müssen, um auch relativ leistungsschwache oder leistungsstarke Antriebsstränge sicher abbremsen zu können, kommen noch diese Sonderanfertigungen hinzu.

Die erhöhte Bauteilvielfalt ist besonders bei Neuerungen nachteilig, da dann die einzelnen Sonderlösungen entsprechend der neuen Technologie angepasst werden müssen, um sicherzustellen, dass auch diese Sonderlösungen gemäß dem jeweils aktuellen Stand der Technik betrieben werden. Dies wiederum zieht erhöhte Entwicklungs- und Herstellkosten nach sich. Insgesamt wird das Produkt teurer.

Ferner können Garantiezusagen dazu führen, dass die Produkte der verschiedenen Bauformen über Jahre hinweg für einen möglicherweise notwendigen Austausch vorrätig gehalten werden müssen.

Das Dokument DE 44 45 178 A1 beschreibt einen am Steuerrädergehäuse einer Brennkraftmaschine montierten Primärretarder. Das Dokument De 41 08 658 A1 offenbart einen sekundärseitig in ein Wechselgetriebe integrierten Sekundärretarder.

EP 2 165 871 A1 beschreibt ein Verfahren zum Betreiben eines Antriebsstranges mit einem hydraulischen Aggregat zur Rekuperation von Bremsleistung.

Der vorliegenden Erfindung liegt die Aufgabe zugrunde, ein Verfahren zum Umrüsten oder Herstellen eines Antriebsstranges sowie einen Antriebsstrang mit einem hydrodynamischen Retarder anzugeben, welche gegenüber dem Stand der Technik verbessert sind.

Insbesondere soll der hydrodynamische Retarder die in bestehenden Antriebssträngen vorhandenen Dauerbremsen verschiedener Bauformen leicht ersetzen können. Gleichzeitig sollen die Bauteilvielfalt sowie die Entwicklungs- und Herstellungskosten reduziert werden.

Die erfindungsgemäße Aufgabe wird durch ein Verfahren zum Umrüsten oder Herstellen eines Antriebsstranges sowie einen Antriebsstrang mit einem hydrodynamischen Retarder gemäß den unabhängigen Ansprüchen gelöst. In den abhängigen Ansprüchen sind besonders vorteilhafte und zweckmäßige Ausgestaltungen der Erfindung angegeben.

Bei einem erfindungsgemäßen Verfahren zum Umrüsten oder Herstellen eines Antriebsstranges ist der Antriebsstrang zur Aufnahme einer Dauerbremse zur Verzögerung von im Antriebsstrang angeordneten Antriebsrädern - bei Ausführung des Antriebsstranges als Kraftfahrzeugantriebsstrang - oder zur Verzögerung einer mit einem Aggregat drehfest ausgeführten Welle des Antriebsstranges - bei Ausführung des Antriebsstranges als Teil einer stationären Anlage - vorgesehen. Dabei ist die Dauerbremse im Hauptzweig des Antriebsstranges zwischen einem Getriebe und den Antriebsrädern - bei Ausführung als Kraftfahrzeugantriebsstrang - oder zwischen dem Getriebe und dem abzubremsenden Aggregat der stationären Anlage - auf der Getriebeabtriebsseite - angeordnet und steht mit einer Getriebeabtriebswelle des Getriebes in Triebverbindung oder ist in eine solche schaltbar. Im Hauptzweig des Antriebsstranges angeordnet bedeutet, dass die Antriebsleistung eines im Antriebsstrang vorgesehenen Antriebsmotors über die Dauerbremse übertragen wird, die Dauerbremse also einen Eingang zur Leistungsaufnahme und einen Ausgang zur Leistungsabgabe aufweist. Beispielsweise kann der Rotor eines als Dauerbremse ausgeführten hydrodynamischen-Retarders-unmittelbar auf der Getriebeabtriebswelle oder auf einer der Getriebeabtriebswelle nachgeordneten Welle, beispielsweise einer Gelenkwelle, positioniert sein.

Erfindungsgemäß wird der Antriebsstrang an der Stelle der Dauerbremse mit einem hydrodynamischen Retarder versehen, umfassend ein Nebenabtriebsmodul und eine hydrodynamische Komponente, mit einem über eine Eingangswelle antreibbaren beschaufelten Rotor und einen beschaufelten Stator, die miteinander einen mit Arbeitsmedium befüllten öder befüllbaren und entleerbaren torusförmigen Arbeitsraum begrenzen, um Drehmoment hydrodynamisch vom Rotor auf den Stator zu übertragen, wobei die Eingangswelle der hydrodynamischen Komponente derart mit dem Nebenabtriebsmodul verbunden wird, dass die hydrodynamische Komponente in Triebverbindung mit der Getriebeabtriebswelle gebracht wird und einen Nebenzweig des Antriebsstranges bildet, um die Antriebsräder oder die Welle des Aggregats bei aktivierter hydrodynamischer Komponente mittelbar abzubremsen.

Dabei bedeutet das mittelbare Abbremsen, dass die Antriebsräder oder die Welle indirekt und somit weitere in Triebverbindung mit dem hydrodynamischen Retarder stehende mechanische Elemente wie z.B. Wellen oder Kupplungen, mitverzögert werden.

Durch das erfindungsgemäße Umrüsten eines für die Aufnahme einer Dauerbremse vorgesehenen Antriebsstranges können nun bereits bestehende Dauerbremsen verschiedener Hersteller durch den erfindungsgemäßen hydrodynamischen Retarder ersetzt werden. Dabei ist es unerheblich wie die zu ersetzende Dauerbremse in ihrer Geometrie, Einbaulage und bezüglich derer Schnittstellen ausgeführt ist. Dadurch, dass die hydrodynamische Komponente des erfindungsgemäßen Retarders vorzugsweise nicht deckungsgleich an derselben Stelle wie die ursprünglich vorgesehene Dauerbremse eingebaut wird, muss die hydrodynamische Komponente nicht unmittelbar an die Schnittstelle der auszutauschenden Dauerbremse angepasst werden. Somit können hinsichtlich der -Gestalt der hydrodynamischen Komponente standardisierte Ausführungsformen, insbesondere bezüglich ihrer geometrischen Abmessung und der erforderlichen Leistung eingesetzt werden. Anpassungen an die gewünschte Leistung, um die auszutauschende Dauerbremse nachzubilden, können einfach durch Anpassen des Nebenabtriebsmoduls erreicht werden, über welches die hydrodynamische Komponente, nun in einem Nebenzweig des Antriebsstranges angeordnet, angetrieben wird. Hierdurch werden die Bauteilvielfalt der hydrodynamischen Komponente und die Entwicklungskosten, Herstellungskosten und Bevorratungskosten reduziert.

Bevorzugt wird der erfindungsgemäße hydrodynamische Retarder hinsichtlich seiner Brems- und/oder Wärmeabgabeleistung so dimensioniert, dass dieser im Wesentlichen der entsprechenden Leistung der ersetzten Dauerbremse entspricht. Hierdurch wird sichergestellt, dass der erfindungsgemäße hydrodynamische Retarder im Wesentlichen dasselbe Bremsmoment liefert wie die zu ersetzende bzw. ausgebaute Dauerbremse.

Eine Anpassung der Leistung des hydrodynamischen Retarders, der nun im Nebenzweig des Antriebsstranges angeordnet ist, an die Leistung der ersetzten Dauerbremse oder an eine sonstige Leistungsvorgabe kann vorteilhaft durch Verändern der Übersetzung und/oder der Geometrie eines im Nebenabtriebsmodul vorgesehenen Zahnradpaares erfolgen.

Vorhandene Komponenten, insbesondere pneumatische, hydraulische und/oder elektrische Leitungen, Ventile und/oder Steuergeräte, die zur Ansteuerung der ersetzten Dauerbremse vorgesehen sind, können vorteilhaft zur Versorgung und/oder Steuerung des nun erfindungsgemäß eingesetzten hydrodynamischen Retarders im Nebenzweig des Antriebsstranges genutzt werden.

Ein erfindungsgemäßer hydrodynamischer Retarder in Modulbauweise umfasst ein hydrodynamisches Modul, umfassend eine hydrodynamische Komponente mit einem beschaufelten Rotor und einem beschaufelten Stator, die einen mit Arbeitsmedium befüllbaren und entleerbaren torusförmigen Arbeitsraum begrenzen, in dem eine hydrodynamische Kreislaufströmung ausbildbar ist, um Drehmoment von dem Rotor auf den Stator zu übertragen, wobei der Rotor von einer Eingangswelle der hydrodynamischen Komponente getragen wird. Die Eingangswelle der hydrodynamischen Komponente kann dabei zugleich die Eingangswelle des hydrodynamischen Moduls darstellen.

Ferner ist ein Nebenabtriebsmodul in einem gemeinsamen Gehäuse des Retarders mit dem hydrodynamischen Modul zusammengefasst, und das Nebenabtriebsmodul weist einen Nebenabtriebseingang mit einem Zahnrad und einen Nebenabtriebsausgang mit einem Ritzel auf, wobei der Nebenabtriebsausgang durch die Eingangswelle der hydrodynamischen Komponente gebildet wird oder in Triebverbindung mit dieser steht.

Der Nebenabtriebseingang ist erfindungsgemäß zur Aufnahme oder zum Anschluss eines aus einem Getriebe herausragenden Bereiches einer Getriebeabtriebswelle oder einer nachfolgenden Welle, insbesondere Gelenkwelle auf der Sekundärseite des Getriebes ausgebildet. Auf der Sekundärseite des Getriebes bedeutet dabei, dass die nachfolgende Welle hinsichtlich des Antriebsleistungsflusses von einem Antriebsmotor in das Getriebe und aus diesem über die Getriebeabtriebswelle wieder hinaus der Getriebeabtriebswelle nachgeordnet ist.

Der Nebenabtriebseingang wird vorteilhaft durch eine Hülse gebildet, die mit der Getriebeabtriebswelle, der nachfolgenden Welle oder insbesondere der Gelenkwelle verbindbar ist und das Zahnrad des Nebenabtriebsmoduls trägt oder ein solches ausbildet. Gemäß einer besonders vorteilhaften Ausgestaltung ist die Hülse auf die Getriebeabtriebswelle aufgeschoben und umschließt ferner eine an der Getriebeabtriebswelle angeschlossene, zu der Getriebeabtriebswelle fluchtend angeordnete Zwischenwelle mit einem Flansch zum Anschluss einer nachfolgenden Welle, beispielsweise Gelenkwelle.

Vorteilhaft trägt die Eingangswelle der hydrodynamischen Komponente, insbesondere zugleich des hydrodynamischen Moduls das Ritzel des Nebenabtriebsmoduls oder bildet ein solches aus.

Gemäß einer Ausführungsform weist das Ritzel eine kleinere Zähnezahl als das Zahnrad auf, sodass sich eine Übersetzung ins Schnelle ergibt, das heißt, dass der Rotor der hydrodynamischen Komponente mit einer größeren Drehzahl umläuft als der Nebenabtriebseingang.

Günstig ist es, wenn der Nebenabtriebseingang beziehungsweise eine diesen ausbildende Welle oder Hülse und die Eingangswelle der hydrodynamischen Komponente parallel zueinander verlaufen.

Vorteilhaft ist in dem gemeinsamen Gehäuse des Retarders ein Arbeitsmediummodul mit dem Nebenabtriebsmodul und dem hydrodynamischen Modul zusammengefasst, das heißt die verschiedenen Module werden von einem gemeinsamen Gehäuse umschlossen, wobei das Gehäuse auch mehrteilig, einzelne Teilgehäuse aufweisend, ausgeführt sein kann. Das Arbeitsmediummodul weist wenigstens einen Arbeitsmediumbehälter für das Arbeitsmedium und/oder einen Wärmetauscher zum Abführen von Wärme aus dem Arbeitsmedium auf. Auch ist es möglich, eine Fülleinrichtung zum Befüllen des Arbeitsraums und zum Entleeren des Arbeitsraums, umfassend entsprechende Ventile oder andere Aktuatoren, im Arbeitsmediummodul vorzusehen.

Bevorzugt weist der hydrodynamische Retarder ferner ein Steuermodul auf, mit wenigstens einer Steuereinrichtung zum Steuern oder Regeln der Leistungsübertragung des hydrodynamischen Retarders. Vorteilhaft ist die Steuereinrichtung als eigenständige und insbesondere von einer dem Getriebe zugeordneten Steuereinrichtung unabhängig ausgebildet. Bevorzugt ist das Steuermodul mit Steuerleitungen, die zum Ansteuern der zu ersetzenden Dauerbremse vorgesehen sind, verbindbar, um den hydrodynamischen Retarder zu regeln oder zu steuern. Derartige Steuerleitungen können zum Beispiel pneumatische, hydraulische und/oder elektrische Leitungen sein.

Bei einem erfindungsgemäß ausgeführten Antriebsstrang, insbesondere Kraftfahrzeugantriebsstrang, ist der in Modulbauweise aufgebaute hydrodynamische Retarder in einem zum Getriebegehäuse zusätzlich vorgesehenen Gehäuse, welches das Nebenabtriebsmodul und das hydrodynamische Modul und insbesondere die genannten weiteren Module wie Arbeitsmediummodul umschließt, vorgesehen, wobei dies gemäß einer Ausführungsform nicht ausschließt, dass das zusätzliche Gehäuse am Getriebegehäuse montiert ist. Jedoch ist das Gehäuse des in Modulbauweise aufgebauten Retarders außerhalb des Getriebegehäuses, vorteilhaft in Richtung des Antriebsleistungsflusses von dem Antriebsmotor in das Getriebe und weiter auf ein nachgeschaltetes Aggregat beziehungsweise auf Antriebsräder auf der Sekundärseite des Getriebegehäuses positioniert.

Die Erfindung soll nun nachfolgend anhand von Ausführungsbeispielen und der beigefügten Figuren exemplarisch erläutert werden.

Es zeigen:
- Figur 1a: einen Antriebsstrang mit einer Dauerbremse gemäß dem Stand der Technik.
- Figur 1b: einen erfindungsgemäßen Antriebsstrang in schematischer Darstellung.
- Figur 2: einen Axialschnitt durch einen erfindungsgemäßen Antriebsstrang mit einem hydrodynamischen Retarder.
- Figur 3: eine schematische Darstellung der Komponenten des erfindungsgemäßen hydrodynamischen Retarders in Modulbauweise.
- Fig. 4a - 4d: die Anbringung des erfindungsgemäßen hydrodynamischen Retarders an einem bestehenden Getriebegehäuse des Antriebsstranges.

In den Figuren gelten für dieselben Elemente die gleichen Bezugszeichen.

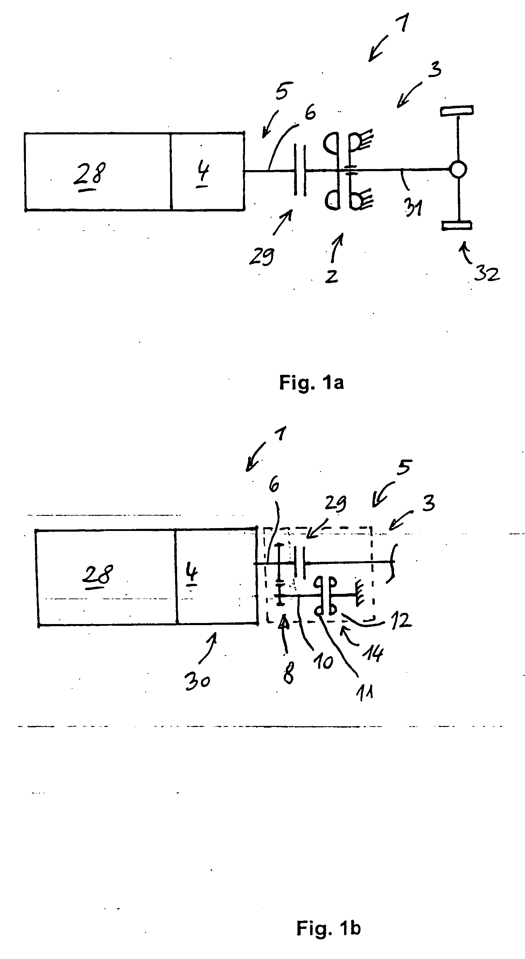

In Figur 1 ist ein Antriebsstrang gemäß dem Stand der Technik gezeigt. Dort sind in Leistungsübertragungsrichtung von einem Antriebsmotor 28, der als Elektromotor oder Verbrennungsmotor ausgeführt sein kann, folgende Komponenten hintereinander geschaltet: ein Getriebe 4, eine Getriebeabtriebswelle 6, die die Getriebeabtriebsseite 5 darstellt, ein Getriebeabtriebsflansch 29 der Getriebeabtriebswelle 6, eine Gelenkwelle 31, die am Getriebeabtriebsflansch 29 angeschlossen ist und Antriebsleistung über ein Achsdifferential auf Antriebsräder 32 überträgt, und eine Dauerbremse 2, hier in Form eines hydrodynamischen Retarders, angeordnet auf der Gelenkwelle 31. Die Dauerbremse 2 ist somit zwischen dem Getriebe 4 und den Antriebsrädern 32 im Hauptzweig 3 des Antriebsstranges 1 angeordnet. In anderen Worten rotiert der mit der Gelenkwelle 31 beziehungsweise über den Getriebeabtriebsflansch 29 mit der Getriebeabtriebswelle 6 verbundene Teil (Rotor) des bestehenden hydrodynamischen Retarders mit derselben Drehzahl wie die Getriebeabtriebswelle 6. Bei aktiviertem Retarder verzögert dieser die Gelenkwelle 31 und damit die Antriebsräder 32.

Anstelle der Positionierung der Dauerbremse 2 auf der Gelenkwelle 31 könnte diese auch unmittelbar auf der Getriebeabtriebswelle 6 oder im Bereich des Getriebeabtriebsflansches 29 positioniert sein.

Figur 1b zeigt den Antriebsstrang von Figur 1a in schematischer Darstellung nach dem erfindungsgemäßen Ersetzen der dortigen als hydrodynamischen Retarder ausgeführten Dauerbremse 2 durch einen erfindungsgemäßen hydrodynamischen Retarder 14. Wie hieraus ersichtlich ist, bildet der hydrodynamische Retarder 14 einen Nebenabtrieb 8 des Antriebsstranges 1 und ist unabhängig vom Getriebes 4 an das Getriebegehäuse 30 angebaut. Dabei bedeutet unabhängig, dass der Nebenabtrieb 8 nicht innerhalb des Getriebegehäuses 30, also nicht im Getriebe 4 selbst sondern in einem eigenen Retardergehäuse (siehe die gestrichelten Linien) angeordnet ist. Somit kann, wenn dies gewünscht ist, verhindert werden, dass sich das Getriebeöl des Getriebes 4 und das Arbeitsmedium des hydrodynamischen Retarders 14 - bei Ausführung des Retarders 14 als Ölretarder oder Wasserretarder- vermischen. Dennoch kann das Retardergehäuse an dem Getriebegehäuse 30 abgestützt oder befestigt sein, um z. B. die Bremsmomente des Stators 12 aufzunehmen und an das Getriebegehäuse 30 abzugeben. Dabei kann der Getriebeabtriebsflansch 29 in dem Retardergehäuse angeordnet sein oder jedoch, anders als dargestellt, zwischen dem Retardergehäuse und dem Getriebegehäuse 30 oder neben oder auch hinter dem Retardergehäuse (aus Blickrichtung des Getriebes 4).

Weiterhin steht eine Eingangswelle 10, die den Rotor 11 des erfindungsgemäßen hydrodynamischen Retarders 14 trägt, über den Nebenabtrieb 8 in Triebverbindung mit der Getriebeabtriebswelle 6. Die Getriebeabtriebswelle 6 und die Eingangswelle 10 sind hierbei parallel zueinander angeordnet.

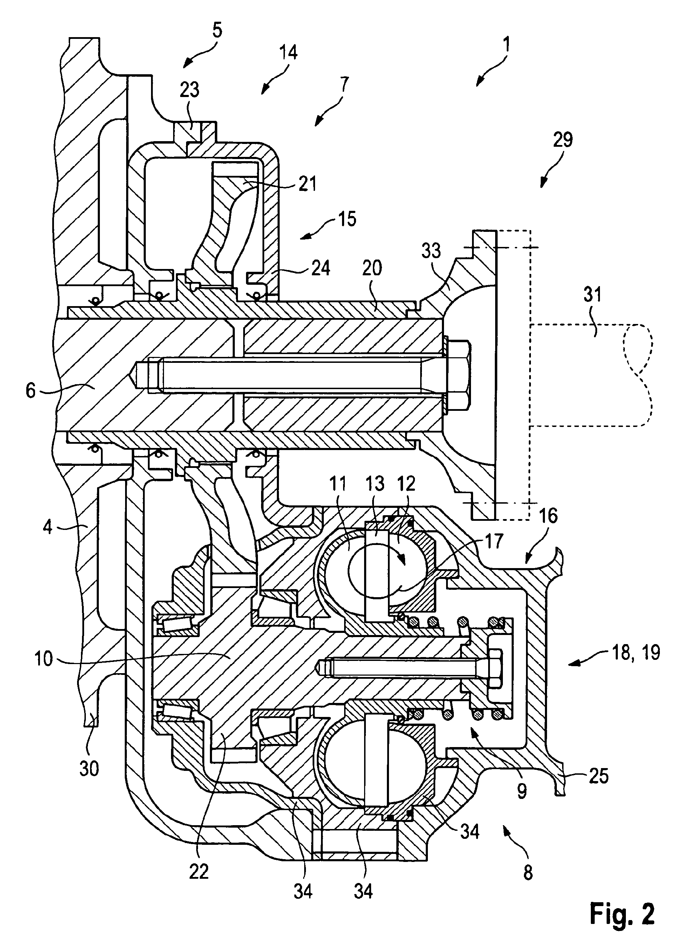

Die Figur 2 zeigt eine bevorzugte Ausführungsform des erfindungsgemäßen hydrodynamischen Retarders 14, der in einem Antriebsstrang, wie er in Figur 1 gezeigt ist, angeordnet ist. Im vorliegenden Fall ist der erfindungsgemäße hydrodynamische Retarder 14 aus einzelnen Modulen zusammengebaut, nämlich einem Nebenabtriebsmodul 15, einem hydrodynamischen Modul 16 sowie einem Arbeitsmediummodul 18. Die einzelnen Module stellen somit definierte Funktionseinheiten des hydrodynamischen Retarders 14 dar.

Das Nebenabtriebsmodul 15 umfasst hierbei eine Hülse 20, die vorliegend auf der Getriebeabtriebsseite 5 auf das Ende der Getriebeabtriebswelle 6 aufgeschoben ist. Die Hülse 20 weist einen Vorsprung in Radialrichtung auf, auf dem sich ein Zahnrad 21 abstützt. Das Zahnrad 21 umschließt die Hülse 20 beziehungsweise den Vorsprung in Umfangsrichtung. Das Zahnrad 21 kann auch einteilig mit der Hülse 20 ausgeführt sein. Die Getriebeabtriebswelle 6, die Hülse 20 und das Zahnrad 21 sind somit drehfest miteinander ausgeführt und dienen der Drehmomentübertragung vom Getriebe 4 auf den Nebenabtrieb 8.

In das dem Getriebe 4 abgewandte Ende der Hülse 20 ist eine Zwischenwelle 33 eingebracht. Letztere ist mit der Getriebeabtriebswelle 6 drehfest verbunden, zum Beispiel durch eine Schraubverbindung. Auch andere Verbindungen wären denkbar. Die Zwischenwelle 33 umfasst einen Flansch, der jetzt den Getriebeabtriebsflansch 29 ausbildet, und der mit einer weiteren Welle, zum Beispiel einer Gelenkwelle 31 (gestrichelte Linie), ebenfalls drehfest verbunden ist. Die Gelenkwelle 31 kann zum Beispiel mit Antriebsrädern oder einer Welle eines Aggregats in Triebverbindung stehen. Bei der Ausführungsform gemäß der Figur 2 ist somit der Getriebeabtriebsflansch 29 außerhalb des Gehäuses des hydrodynamischen Retarders mit den einzelnen Modulen angeordnet.

Das Nebenabtriebsmodul 15 ist teilweise von Teilgehäusen 23 und 24 umschlossen. Vorliegend umschließen die Teilgehäuse 23 und 24 das Zahnrad 21 und das Ritzel 22 sowohl in Axial- als auch in Umfangsrichtung des hydrodynamischen Retarders 14. Dies könnte jedoch auch anders sein. Hier ist ferner das Teilgehäuse 23 an das Getriebegehäuse 30 des Getriebes 4 montiert, sodass sich die Getriebewelle 6 und damit die Hülse 20 sowie das Zahnrad 21 und das Ritzel 22 relativ zu den feststehenden Teilgehäusen 23 und 24 drehen. In den Teilgehäusen 23, 24 können Dichtungen vorgesehen sein, um einen Übertritt von Arbeitsmedium, insbesondere Öl, aus den Teilgehäusen 23, 24 nach außen, insbesondere zum Getriebe 4 hin, zu vermeiden.

Das hydrodynamische Modul 16 umfasst eine hydrodynamische Komponente 9 mit einer Eingangswelle 10, die das Ritzel 22 des Nebenabtriebsmoduls 15 trägt, wobei das Ritzel 22 mit dem Zahnrad 21 des Nebenabtriebsmoduls 15 kämmt. Das Ritzel 22 ist drehfest und vorzugsweise einteilig mit der Eingangswelle 10 ausgeführt. Das Ritzel 22 könnte jedoch auch auf andere Weise mit der Eingangswelle 10 drehfest ausgeführt sein.

Die Eingangswelle 10 trägt den Rotor 11 im Bereich ihres dem Ritzel 22 abgewandten Endes. Weiterhin ist ein Stator 12 vorgesehen, der mit dem Rotor 11 einen torusförmigen Arbeitsraum 13 ausbildet. Im Arbeitsraum 13 kann sich bei aktiviertem Retarder 14 eine Kreislaufströmung des Arbeitsmediums einstellen. Diese ist durch den Pfeil 17 angedeutet. Mittels der Kreislaufströmung wird in Leistungsübertragungsrichtung von der Getriebeabtriebswelle 6 gesehen Antriebsleistung vom Getriebe zur hydrodynamischen Komponente 9, über die Hülse 20, das Zahnrad 21, die Eingangswelle 10 auf den Rotor 11 und dort über die Kreislaufströmung auf den Stator 12 übertragen bzw. vom Hauptantriebszweig des Antriebsstranges 1 abgezweigt, wodurch der Rotor 11 und die mit ihm drehfest ausgeführte Welle bei aktiviertem Retarder 14 verzögert werden.

Der Rotor 11 und der Stator 12 bilden hierbei die hydrodynamische Komponente 9. Da der hydrodynamische Retarder 14, wenn er aktiviert ist, vorliegend Antriebsleistung aus dem Hauptantriebszweig, also der Getriebeabtriebswelle 6 entnimmt, ohne dass diese-Antriebsleistung weitergeführt wird oder zurück in den Hauptzweig eingeleitet wird, bildet der hydrodynamische Retarder 14 mit seinem Nebenabtriebsmodul 15 und dem hydrodynamischen Modul 16 beziehungsweise der hydrodynamischen Komponente 9 einen Nebenzweig des Antriebsstrangs 1 aus.

Der Rotor 11 der hydrodynamischen Komponente 9 kann, wie gezeigt, fliegend auf der Eingangswelle 10, welche beidseitig des Ritzels 22 jeweils mit einem Lager, hier Wälzlager, gelagert ist, gelagert sein. Die Lager beidseits des Ritzels 22 stützen sich im Gehäuse des hydrodynamischen Retarders 14, insbesondere in zwei in die Teilgehäuse 23 und 24 eingebrachten inneren Gehäuseelemente 34 ab. Vorliegend wird ferner der Stator 12 der hydrodynamischen Komponente 9 durch eine weitere innere Gehäusekomponente 34 gebildet, die wiederum teilweise von einem weiteren Teilgehäuse 25 umschlossen wird.

Die hydrodynamische Komponente 9 wird von dem weiteren Teilgehäuse 25 wenigstens teilweise in Axial- und/oder Umfangsrichtung des hydrodynamischen Retarders 14 umschlossen. Das Teilgehäuse 25 bildet mit den Teilgehäusen 23 und 24 sowie den inneren Gehäuseelementen 34 das Gesamtgehäuse des hydrodynamischen Retarders 14 und umfasst die einzelnen Module, also das Nebenabtriebsmodul 15, das hydrodynamische Modul 16 sowie das Arbeitsmediummodul 18. Es fasst die einzelnen Module zu einer einzigen Retarderbaueinheit 7 zusammen, die durch ihre autarke Ausführung unabhängig von dem Getriebe 4 in einem eigenen, insbesondere alle Module vollständig aufnehmenden Retardergehäuse gekennzeichnet ist.

Das hier teilweise gezeigte Arbeitsmediummodul 18 kann beispielsweise einen Arbeitsmediumbehälter 19 oder zusätzlich oder alternativ einen Wärmetauscher zum Ableiten von Wärme aus dem Arbeitsmedium aufweisen. Das Arbeitsmediummodul 18 dient somit dazu, zur Ausbildung des hydrodynamischen Kreislaufes im Arbeitsraum-13 die notwendige Menge Arbeitsmedium in einer geeigneten Temperatur zur Verfügung zu stellen, sowie aus dem Arbeitsraum 13 ausgetragenes Arbeitsmedium wieder aufzunehmen und gegebenenfalls zu kühlen. Die Retarderbaueinheit 7 beziehungsweise der Retarder 14 umfasst somit mit dem Arbeitsmediummodul 18 eine autarke Arbeitsmediumversorgung, welche Arbeitsmedium zum Betreiben des Retarders 14 bereitstellt, unabhängig von einem Getriebeölkreislauf des Getriebes 4.

Auch das Arbeitsmediummodul 18 kann, wie nachfolgend noch dargestellt wird, selbst wieder modular, insbesondere umfassend ein Arbeitsmediumbehältermodul und ein Wärmetauschermodul, aufgebaut sein, um eine höchstmögliche Flexibilität bei der Bereitstellung eines geeigneten, an die individuelle Einbausituation angepassten Retarders aus bevorrateten Standardkomponenten zu bieten.

Bevorzugt sind die den Modulen 15, 16 und 18 zugeordneten Teilgehäuse 23, 24 und 25 und gegebenenfalls die gezeigten inneren Gehäuseelemente 34 lösbar miteinander verbunden.

Um Leistungsverluste im Leerlauf des hydrodynamischen Retarders 14 zu vermeiden, können, wie in der Figur 2 dargestellt, Mittel zum relativen Abfahren des Rotors 11 gegen den Stator 12 vorgesehen sein (siehe dort die zwischen Eingangswelle 10 und Rotor 11 eingespannte Feder).

Zum Einsetzen des erfindungsgemäßen hydrodynamischen Retarders 14 in einen bestehenden Antriebsstrang, wie er z.B. in der Figur 1a gezeigt ist, wird zunächst die Triebverbindung zwischen dem Getriebe 4 und der bestehenden Dauerbremse 2 getrennt. Dies geschieht beispielsweise durch Unterbrechen der Triebverbindung zwischen der Getriebeabtriebswelle 6 und der Gelenkwelle 31, gegebenenfalls durch Abtrennen des Getriebeabtriebsflansches 29 von der Getriebeabtriebswelle 6. Hiernach wird die Dauerbremse 2 aus dem Antriebsstrang 1 entfernt.

Daraufhin wird das erste Teilgehäuse 23 über die Getriebeabtriebswelle 6 geschoben und an das Getriebegehäuse 30 montiert. Hiernach wird die Hülse 20 mit dem Zahnrad 21 auf die Getriebeabtriebswelle 6 aufgeschoben und mit dieser drehfest verbunden. Anschließend wird das weitere Teilgehäuse 24 über die Hülse 20 geschoben und mit dem Teilgehäuse 23 fixiert.

Danach kann dann die hydrodynamische Komponente 9 zusammen mit der Eingangswelle 10, dem Ritzel 22, den Lagern und den inneren Gehäuseelementen 34 eingebaut werden. Dazu werden diese in-die Teilgehäuse 23, 24 eingesetzt, sodass das Ritzel 22 der Eingangswelle 10 mit dem Zahnrad 21 in kämmenden Eingriff gelangt. Anschließend wird das weitere Teilgehäuse 25 über die hydrodynamische Komponente 9 geschoben und mit wenigstens einem der Teilgehäuse 23, 24 fixiert. Anschließend kann noch das Arbeitsmediummodul 18 an das Teilgehäuse 25 angebracht werden.

Zum Schluss wird die Triebverbindung zwischen der Getriebeabtriebswelle 6 und der Gelenkwelle 31 hergestellt. Hierzu wird die Zwischenwelle 33 mit der Hülse 20 einerseits und andererseits mit der Gelenkwelle 31 montiert. Jedoch ist je nach Einbaulage des hydrodynamischen Retarders 14 im Antriebsstrang 1 auch eine andere Reihenfolge der beschriebenen Montageschritte denkbar.

Bei der gezeigten Ausführungsform tragen die inneren Gehäuseelemente 34 die Lager für die Eingangswelle 10 und bilden den Stator 12 der hydrodynamischen Komponente 9 aus. Wie gezeigt, sind hierzu beispielsweise die beiden inneren Gehäuseelemente 34, welche die Lager für die Eingangswelle 10 tragen, zwischen den Teilgehäusen 23 und 24 auf der einen Seite und dem Teilgehäuse 25 auf der anderen Seite eingeklemmt. Das den Stator 12 ausbildende innere Gehäuseelement 34 ist zwischen dem ihm zugewandten lagertragenden inneren Gehäuseelement 34 und dem Teilgehäuse 25 formschlüssig eingeklemmt und bildet vorteilhaft Kanäle für Arbeitsmedium zusammenmit dem Teilgehäuse 25 aus.

Bevorzugt stellen das Zahnrad 21 und das Ritzel 22 einen Hochtrieb, also eine Übersetzung ins Schnelle bezogen auf die Drehzahl der Getriebeabtriebswelle 6 dar. Durch eine entsprechende Zahnrad-Ritzel-Paarung können somit verschiedene Drehzahlen- bzw. Drehmomentwerte der Eingangswelle 10 und somit des Rotors 11 herstellerseitig eingestellt werden. Dies bedeutet; dass die Bremsleistung des hydrodynamischen Retarders 14 entsprechend eingestellt werden kann, da diese von der Drehzahl der umlaufenden Schaufelräder, hier dem Rotor 11 abhängt. Bei einer Ausführung als Gegenlaufretarder hat auch die Drehzahl des Gegenlaufrotors, der anstelle des Stators vorgesehen ist, einen Einfluss auf die Bremsleistung.

Eine solche Einstellung ermöglicht es, den hydrodynamischen Retarder 14 entsprechend der erzielbaren Bremsleistung noch genauer auszulegen als dies mit den herkömmlichen Retardern gemäß dem Stand der Technik möglich ist, ohne eine entsprechende Vielzahl verschiedener hydrodynamischer Komponenten 9 zur Verfügung stellen zu müssen. Dies wird dadurch erzielt, dass der Rotor 11 durch die entsprechende Übersetzung einfach "schneller" oder "langsamer" betrieben wird. Hierdurch können auch hydrodynamische Retarder, welche herkömmlich eine relativ kleine Leistungsauslegung, bezogen auf deren Nenndrehzahl, aufweisen, höhere Bremsmomente liefern oder umgekehrt. Somit können hydrodynamische Retarder 14 bereitgestellt werden, die eine feine Abstufung ihrer Bremsleistung ermöglichen.

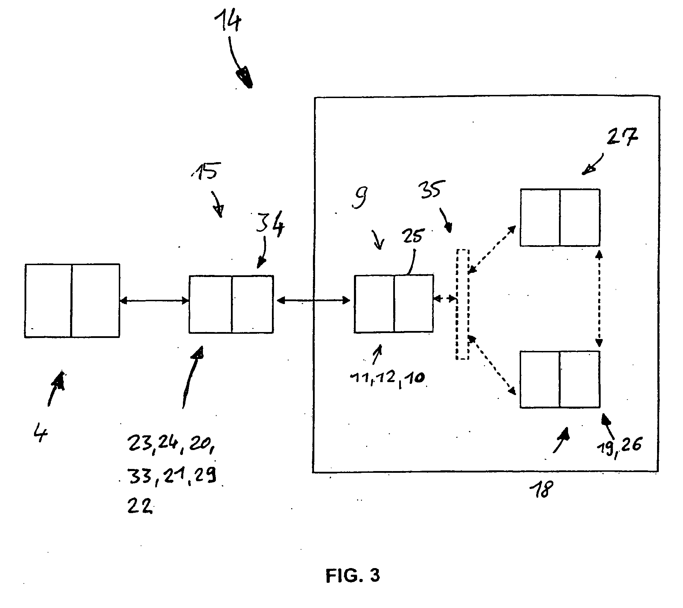

Die Figur 3 verdeutlicht eine Ausführungsform eines erfindungsgemäßen Herstellungsverfahrens nach dem Baukastenprinzip für den in Modulbauweise aufgebauten Retarder 14 anhand einer schematischen Darstellung. So können zum Beispiel für das Nebenabtriebsmodul 15 Teilgehäuse 23 und 24 sowie Hülsen 20 beziehungsweise Zwischenwellen 23 mit Getriebeabtriebsflansch 29 und Zahnrad 21 in verschiedenen Größen vorgehalten werden, um für einen bestimmten Einsatzfall die jeweils geeigneten zusammenpassenden Größen der Bauteile zu verwenden und-einzusetzen.

Die inneren Gehäuseelemente 34 des Nebenabtriebsmoduls 15, welche die Lager aufnehmen, können entweder ebenfalls in verschiedenen Größen bevorratet werden oder vorteilhaft in nur einer für die verschiedenen Einsatzzwecke passenden Größe, wenn nämlich nur identische Wellenachsabstände und/oder identische Kreislaufteile für die hydrodynamische Komponente 9 verwendet werden, worauf nachfolgend noch eingegangen wird.

Gemäß einer Ausführungsform werden für das Nebenabtriebsmodul 15 zwei Varianten, die insbesondere seitenverkehrt zueinander ausgeführt sind, jeweils in verschiedenen Größen vorgehalten, um den Retarder 14 wahlweise auf einer der beiden Seiten der Getriebeabtriebswelle 6 beziehungsweise der Gelenkwelle 31 positionieren zu können.

Für die hydrodynamische Komponente 9 können nun das Teilgehäuse 25, der Rotor 11, der Stator 12 sowie die Eingangswelle 10 in einer Standardgröße bevorratet vorgehalten werden, wenn dies gewünscht ist. Das Ritzel 22 hingegen wird vorteilhaft in verschiedenen Größen vorgehalten, wobei das Ritzel 22 vorliegend logisch dem Nebenabtriebsmodul 15 zugeordnet wird.

An die somit weitgehend oder vollständig standardisierte hydrodynamische Komponente 9 in nur einer oder nur wenigen Größen kann dann wahlweise, gegebenenfalls unter Zwischenschaltung eines Schnittstellenbauteils 35, entweder ein Arbeitsmediumbehältermodul 26 oder ein Wärmetauschermodul 27 oder beides angeschlossen werden. Sowohl das Arbeitsmediumbehältermodul 26 als auch das Wärmetauschermodul 27 stellen ein zuvor beschriebenes Arbeitsmediummodul 18 dar, wobei das Arbeitsmediumbehältermodul 26 einen geeigneten Arbeitsmediumbehälter 19 und das Wärmetauschermodul 27 einen geeigneten Wärmetauscher umfasst, beides insbesondere in verschiedenen Ausführungsformen bevorratet. Durch die Anordnung in einem Modul erfolgt ein standardisierter Anschluss, obwohl verschiedene Größen und/oder Geometrien des Arbeitsmediumbehälters 19 beziehungsweise des Wärmetauschers vorgehalten werden können.

In der Figur 3 sind jene Komponenten in einem Kasten eingerahmt, welche somit in einer oder wenigen Standardformen bevorratet werden können, und durch Auswahl des geeigneten Nebenabtriebsmoduls 15 zur Darstellung verschiedener Leistungsklassen an ein Getriebe 4 angeschlossen werden können.

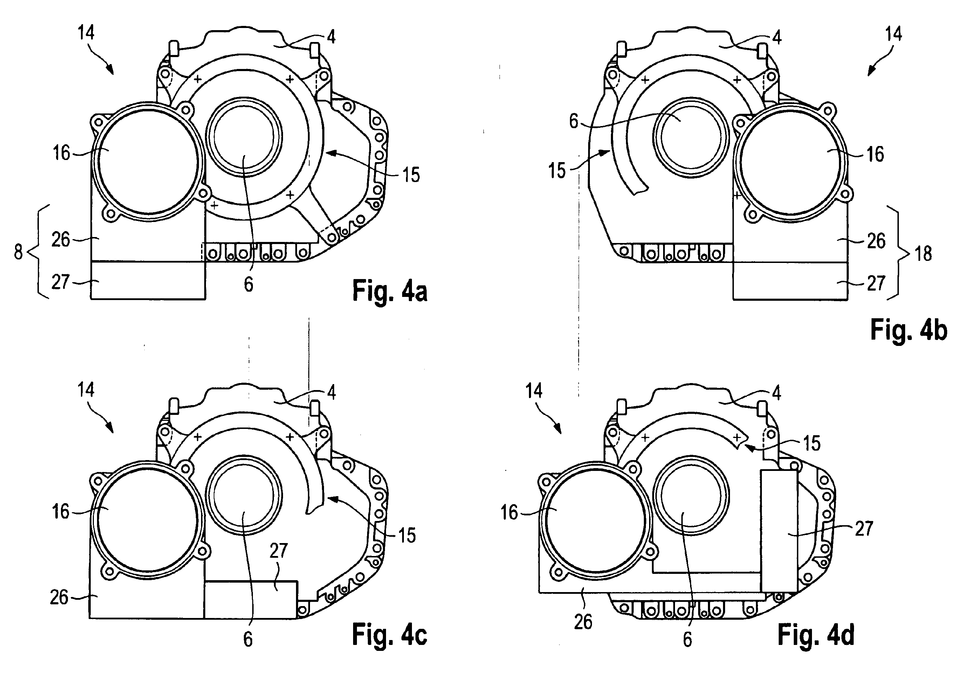

Die Figuren 4a bis 4d zeigen in einer stirnseitigen Draufsicht auf die Getriebeabtriebswelle 6 auf der Getriebeabtriebsseite des Getriebes 4 die unterschiedliche Möglichkeiten der Anbringung des erfindungsgemäßen, hydrodynamischen Retarders 14 an ein bestehendes Getriebegehäuse 30. In der Figur 4a ist das hydrodynamische Modul 16, welches die hydrodynamische Komponente mit dem beschaufelten Rotor und dem beschaufelten Stator umfasst, -links-neben der Getriebeabtriebswelle 6 angeordnet. Unterhalb des hydrodynamischen Moduls 16 schließt sich das Arbeitsmediumbehältermodul 26, umfassend einen entsprechenden Arbeitsmediumbehälter (nicht dargestellt), gefolgt von einem Wärmetauschermodul 27, umfassend einen entsprechenden Wärmetauscher (nicht gezeigt), an. Vorliegend wird demnach das Arbeitsmediummodul 18 durch zwei (Unter-)Module, eines zur Aufnahme des Arbeitsmediums, insbesondere Öl, und eines zum Ableiten von Wärme aus dem Arbeitsmedium, gebildet.

Entsprechendes gilt für die Ausführungsform gemäß der Figur 4b, nur dass hierbei das Arbeitsmediummodul 18, umfassend das Arbeitsmediumbehältermodul 26 und das Wärmetauschermodul 27, auf der rechten Seite der Getriebeabtriebswelle 6 --angeordnet sind, unterhalb des ebenfalls auf der rechten Seite angeordneten hydrodynamischen Moduls 16.

Gemäß der Figur 4c ist das Arbeitsmediumbehältermodul 26 unterhalb des hydrodynamischen-Moduls 16 links neben der Getriebeabtriebswelle 6 positioniert, und das Wärmetauschermodul 27 ist unterhalb der Getriebeabtriebswelle 6 neben dem Arbeitsmediumbehältermodul 26 positioniert.

Gemäß der Ausführungsform in der Figur 4d erstreckt sich das Arbeitsmediumbehältermodul 26 ausgehend von einem Bereich, der unterhalb des hydrodynamischen Moduls 16, das links neben der Getriebeabtriebswelle 6 positioniert ist, angeordnet ist, bis zu einem Bereich rechts unterhalb der Getriebeabtriebswelle 6. Das Wärmetauschermodul 27 schließt sich rechts der Getriebeabtriebswelle 6 verlaufend vom Arbeitsmediumbehältermodul 26 nach oben in den Bereich neben die Getriebeabtriebswelle 6 an.

Durch die Erfindung kann die Variantenvielfalt aufgrund unterschiedlicher Leistungsklassen durch eines oder mehrere der nachfolgenden Merkmale kompensiert werden:
- unterschiedliche Übersetzungsstufen im Nebenabtriebsmodul 15, insbesondere bei gleichbleibendem Achsabstand zwischen Zahnrad und Ritzel;
- unterschiedlich dimensionierte Wärmetauschermodule 26;
- unterschiedliche Ansteuerparameter, insbesondere einen variierenden auf das Arbeitsmedium im Arbeitsraum 13 aufgebrachten Steuerdruck;
- bei einer Einlasssteuerung oder Auslasssteuerung des in den beziehungsweise aus dem Arbeitsraum 13 strömenden Arbeitsmediums durch unterschiedliche Androsselung beziehungsweise Drosseldimensionierung;
- Ersatz von Inline-Retardern (Retardern im Hauptzweig eines Antriebsstranges) durch Offline-Retarder (Retarder in einem Nebenzweig).

### Bezugszeichenliste

- 1: Antriebsstrang
- 2: Dauerbremse
- 3: Hauptzweig
- 4: Getriebe
- 5: Getriebeabtriebsseite
- 6: Getriebeabtriebswelle
- 7: Retarderbaueinheit
- 8: Nebenabtrieb
- 9: hydrodynamische Komponente
- 10: Eingangswelle
- 11: Rotor
- 12: Stator
- 13: Arbeitsraum
- 14: hydrodynamischer Retarder
- 15: Nebenabtriebsrmodul
- 16: hydrodynamisches Modul
- 17: Kreislaufströmung
- 18: Arbeitsmediummodul
- 19: Arbeitsmediumbehälter
- 20: Hülse
- 21: Zahnrad
- 22: Ritzel
- 23, 24, 25: Teilgehäuse
- 26: Arbeitsmediumbehältermodul
- 27: Wärmetauschermodul
- 28: Antriebsmotor
- 29: Getriebeabtriebsflansch
- 30: Getriebegehäuse
- 31: Gelenkwelle
- 32: Antriebsräder
- 33: Zwischenwelle
- 34: innere Gehäuseelemente
- 35: Schnittstellenbauteil

## Patentansprüche

1. Verfahren zum Umrüsten oder Herstellen eines Antriebsstranges (1), der zur Aufnahme einer Dauerbremse (2) zur Verzögerung von im Antriebsstrang (1) angeordneten Antriebsrädern - bei Ausführung des Antriebsstranges (1) als Kraftfahrzeugantriebsstrang - oder zur Verzögerung einer mit einem Aggregat drehfest ausgeführten Welle des Antriebsstrangs (1) - bei Ausführung des Antriebsstrangs (1) - als Teil einer stationären Anlage, vorgesehen ist;
1.1 wobei die Dauerbremse (2) im Hauptzweig (3) des Antriebsstrangs (1) zwischen einem Getriebe (4) und den Antriebsrädern - bei Ausführung als Kraftfahrzeugantriebsstrang - oder zwischen dem Getriebe (4) und dem abzubremsenden Aggregat der stationären Anlage - auf der Getriebeabtriebsseite (5) angeordnet ist und mit einer Getriebeabtriebswelle (6) des Getriebes (4) in Triebverbindung steht oder in eine solche schaltbar ist;
**dadurch gekennzeichnet, dass**
1.2 der Antriebsstrang (1) an der Stelle der Dauerbremse (2) mit einem hydrodynamischen Retarder (14) versehen wird, umfassend ein Nebenabtriebsmodul (15) und eine hydrodynamische Komponente (9) mit einem über eine Eingangswelle (10) antreibbaren beschaufelten Rotor (11) und einem beschaufelten Stator (12), die miteinander einen mit Arbeitsmedium befüllten oder befüllbaren und entleerbaren torusförmigen Arbeitsraum (13) begrenzen, um Drehmoment hydrodynamisch vom Rotor (11) auf den Stator (12) zu übertragen; wobei
1.3 die Eingangswelle (10) der hydrodynamischen Komponente (9) derart mit dem Nebenabtriebsmodul (15) verbunden wird, dass die hydrodynamische Komponente (9) in Triebverbindung mit der Getriebeabtriebswelle (6) gebracht wird und einen Nebenzweig des Antriebsstranges (1) bildet, um die Antriebsräder oder die Welle des Aggregats bei aktivierter hydrodynamischer Komponente (9) mittelbar abzubremsen.

2. Verfahren gemäß Anspruch 1, **dadurch gekennzeichnet, dass** der hydrodynamische Retarder (14) die Dauerbremse (2) in ihrer Funktion ersetzt und insbesondere die Dauerbremse (2) aus dem Antriebsstrang (1) entfernt wird.

3. Verfahren gemäß einem der Ansprüche 1 oder 2, **dadurch gekennzeichnet, dass** der hydrodynamische Retarder (14) hinsichtlich seiner Brems- und/oder Wärmeabgabeleistung so dimensioniert ist, dass diese im Wesentlichen der entsprechenden Leistung der ersetzten Dauerbremse (2) entspricht/entsprechen.

4. Verfahren gemäß einem der Ansprüche 1 bis 3, **dadurch gekennzeichnet, dass** eine Anpassung der Leistung des hydrodynamischen Retarders (14) an die Leistung der ersetzten Dauerbremse (2) oder an eine sonstige Leistungsvorgabe durch Verändern der Übersetzung und/oder der Geometrie eines im Nebenabtriebsmodul (15) vorgesehenen Zahnradpaares (21, 22) erfolgt.

5. Verfahren gemäß einem der Ansprüche 1 bis 4, **dadurch gekennzeichnet, dass** vorhandene Komponenten, insbesondere pneumatische, hydraulische und/oder elektrische Leitungen, Ventile und/oder Steuergeräte, die zur Ansteuerung der ersetzten Dauerbremse (2) vorgesehen sind, zur Versorgung und/oder Steuerung des hydrodynamischen Retarders (14) genutzt werden.

6. Antriebsstrang, insbesondere Kraftfahrzeugantriebsstrang, mit einem Antriebsmotor (28) und einem dem Antriebsmotor (28) nachgeschalteten Getriebe (4), wobei das Getriebe (4) auf seiner Getriebeabtriebsseite (5) eine Getriebeabtriebswelle (6) zur Übertragung der Antriebsleistung,des Antriebsmotors (28) auf Antriebsräder (32) oder ein nachgeordnetes Aggregat aufweist, und die Getriebeabtriebswelle (6) aus einem das Getriebe (4) umschließenden Getriebegehäuse (30) herausragt,
**dadurch gekennzeichnet, dass**
6.1 außerhalb des Getriebegehäuses (30) ein hydrodynamischer Retarder (14) in Modulbauweise angeordnet ist, umfassend ein hydrodynamisches Modul (16) mit einer hydrodynamischen Komponente (9), umfassend einen beschaufelten Rotor (11) und einen beschaufelten Stator (12), die einen mit Arbeitsmedium befüllbaren und entleerbaren torusförmigen Arbeitsraum (13) begrenzen, in dem eine hydrodynamische Kreislaufströmung (17) ausbildbar ist, um Drehmoment vom Rotor (11) auf den Stator (12) zu übertragen, wobei der Rotor (11) von einer Eingangswelle (10) der hydrodynamischen Komponente (9) getragen wird; wobei
6.2 ein Nebenabtriebsmodul (15) in einem gemeinsamen Gehäuse mit dem hydrodynamischen Modul (16) zusammengefasst ist, und das Nebenabtriebsmodul (15) einen Nebenabtriebseingang mit einem Zahnrad (21) und einen Nebenabtriebsausgang mit einem Ritzel (22) aufweist, wobei der Nebenabtriebsausgang durch die Eingangswelle (10) der hydrodynamischen Komponente (9) gebildet wird oder in Triebverbindung mit dieser steht, und
6.3 der Nebenabtriebseingang an der Getriebeabtriebswelle (6) oder einer der Getriebeabtriebswelle (6) nachgeordneten Welle, insbesondere Gelenkwelle (31), drehfest angeschlossen ist

7. Antriebsstrang gemäß Anspruch 6, **dadurch gekennzeichnet, dass** der Nebenabtriebseingang durch eine Hülse (20) gebildet wird, die mit der Getriebeabtriebswelle (6) des Getriebes (4) verbunden ist und das Zahnrad (21) trägt oder ein solches ausbildet, und die Eingangswelle (10) der hydrodynamischen Komponente (9) das Ritzel (22) trägt oder ein solches ausbildet, welches mit dem Zahnrad (21) der Hülse (20) kämmt, wobei das Zahnrad (21) und das Ritzel (22) insbesondere derart dimensioniert sind, dass sich eine Übersetzung ins Schnelle ergibt.

8. Antriebsstrang gemäß einem der Ansprüche 6 oder 7, **dadurch gekennzeichnet, dass** der Nebenabtriebseingang und die Eingangswelle (10) der hydrodynamischen Komponente (9) parallel zueinander verlaufen.

9. Antriebsstrang gemäß einem der Ansprüche 6 bis 8, **dadurch gekennzeichnet, dass** in dem gemeinsamen Gehäuse des Retarders mit dem Nebenabtriebsmodul (15) und dem hydrodynamischen Modul (16) ferner ein Arbeitsmediummodul (18) mit einem Arbeitsmediumbehälter (19) und/oder einem Wärmetauscher zum Abführen von Wärme aus dem Arbeitsmedium zusammengefasst ist, wobei das Arbeitsmediummodul (18) insbesondere aus einem Arbeitsmediumbehältermodul (26), umfassend den Arbeitsmediumbehälter (19) und einem Wärmetauschermodul (27), umfassend den Wärmetauscher zusammengesetzt ist.

10. Antriebsstrang gemäß einem der Ansprüche 6 bis 9, **dadurch gekennzeichnet, dass** jedes Modul (15, 16, 18, 26, 27) oder mehrere Module (15, 16, 18, 26, 27) zusammen jeweils ein Teilgehäuse-(23, 24, 25) umfasst/umfassen, wobei jedes der Teilgehäuse (23, 24, 25) wenigstens einen Teil des entsprechenden Moduls (15, 16, 18, 26, 27) insbesondere in Axial- und/oder Umfangsrichtung des hydrodynamischen Retarders (14) umschließt, und im zusammengebauten Zustand des hydrodynamischen Retarders (14) die einzelnen Teilgehäuse (23, 24, 25) zusammen das Gehäuse des Retarders (14) bilden.

11. Antriebsstrang gemäß Anspruch 10, **dadurch gekennzeichnet, dass** die den Modulen (15, 16, 18, 26, 27) zugeordneten Teilgehäuse (23, 24, 25) lösbar miteinander verbunden sind.

## Claims

1. A method for retrofitting or producing a drive train (1) which is provided for accommodating a permanent brake (2) for retarding drive wheels arranged in the drive train (1) - when the drive train (1) is carried out as a drive train for motor vehicles - or for retarding a shaft of the drive train (1) which is arranged in a torque-proof manner with a unit - when the drive train (1) is carried out as a part of a stationary system;
1.1 with the permanent brake (2) being arranged in the main branch (3) of the drive train (1) between a transmission (4) and the drive wheels - when carried out as a drive train for motor vehicles - or between the transmission (4) and the unit to be braked of the stationary system- on the transmission output side (5) - and is drivingly connected to a transmission output shaft (6) of the transmission (4) or can be shifted into the same;
**characterized in that**
1.2 the drive train (1) is provided with a hydrodynamic retarder (14) in the place of the permanent brake (2), comprising a power take-off module (15) and a hydrodynamic component (9) with a bladed rotor (11) which can be driven by way of an input shaft (10), and a bladed stator (12), which jointly delimit a toroidal working chamber (13) which is filled or can be filled with working medium and be discharged thereof in order to transmit torque hydrodynamically from the rotor (11) to the stator (12), with
1.3 the input shaft (10) of the hydrodynamic component (9) being connected to the power take-off module (15) in such a way that the hydrodynamic component (9) is brought into driving connection with the transmission output shaft (6) and forms a side branch of the drive train (1) in order to indirectly brake the drive wheels or the shaft of the unit when the hydrodynamic component (9) is activated.

2. The method according to claim 1, **characterized in that** the hydrodynamic retarder (14) replaces the permanent brake (2) in its function and especially the permanent brake (2) is removed from the drive train (1).

3. The method according to one of the claims 1 or 2, **characterized in that** the hydrodynamic retarder (4) is dimensioned with respect to its braking and/or heat emission power in such a way that it substantially corresponds to the respective power of the replaced permanent brake (2).

4. The method according to one of the claims 1 to 3, **characterized in that** an adjustment of the power of the hydrodynamic retarder (14) to the power of the replaced permanent brake (2) or any other power requirement occurs by changing the gear ratio and/or the geometry of a gearwheel pair (21, 22) provided in the power take-off module (15).

5. The method according to one of the claims 1 to 4, **characterized in that** existing components, especially pneumatic, hydraulic and/or electric lines, valves and/or control devices provided for triggering the replaced permanent brake (2) are used for supplying and/or controlling the hydrodynamic retarder (14).

6. A drive train, especially a drive train for a motor vehicle, comprising a drive engine (28) and a transmission (4) connected downstream to the engine (28), with the transmission (4) comprising on its transmission output side (5) a transmission output shaft (6) for the transmission of drive power of the drive engine (28) to drive wheels (32) or a downstream unit, and the transmission output shaft (6) protrudes from a transmission housing (30) enclosing the transmission (4),
**characterized in that**
6.1 a hydrodynamic retarder (14) in modular configuration is arranged outside of the transmission housing (30), comprising a hydrodynamic module (16) with a hydrodynamic component (9), comprising a bladed rotor (11) and a bladed stator (12) which delimit a toroidal working chamber (13) which can be filled with working medium and discharged thereof, in which a hydrodynamic circuit flow (17) can be formed in order to transmit torque from the rotor (11) to the stator (12), with the rotor (11) being carried by an input shaft (10) of the hydrodynamic component (9), with
6.2 a power take-off module (15) being combined in a common housing with the hydrodynamic module (16), and the power take-off module (15) comprising a power take-off input with a gearwheel (21) and a power take-off output with a pinion (22), with the power take-off output being formed by the input shaft (10) of the hydrodynamic component (9) or being in drive connection with the same,
6.3 the power take-off input is connected in a torque-proof manner to the transmission output shaft (6) or a shaft especially a universal-joint shaft (31), downstream to the transmission output shaft (6).

7. The drive train according to claim 6, **characterized in that** the power take-off input is formed by a sleeve (20) which is connected with the transmission output shaft (6) of the transmission (4) and carries the gearwheel (21) or forms said gearwheel, and the input shaft (10) of the hydrodynamic component (9) carries the pinion (22) or forms said pinion, which meshes with the gearwheel (21) of the sleeve (20), with the gearwheel (21) and the pinion (22) being especially dimensioned in such a way that a speed-increasing ratio is obtained.

8. The drive train according to one of the claims 6 or 7, **characterized in that** the power take-off input and the input shaft (10) of the hydrodynamic component (9) extend parallel with respect to each other.

9. The drive train according to one of the claims 6 to 8, **characterized in that** further a working medium module (18) is combined in the common housing of the retarder with a working medium container (19) and/or a heat exchanger for dissipating heat from the working medium with the power take-off module (15) and the hydrodynamic module (16), the working medium module (18) being composed especially of a working medium container module (26), comprising the working medium container (19) and a heat exchanger module (27) comprising the heat exchanger.

10. The drive train according to one of the claims 6 to 9, **characterized in that** each module (15, 16, 18, 26, 27) or several modules (15, 16, 18, 26, 27) jointly respectively comprise a partial housing (23, 24, 25), with each of the partial housings (23, 24, 25) enclosing at least a part of the respective module (15, 16, 18, 26, 27) especially in the axial and/or circumferential direction of the hydrodynamic retarder (14), and the individual partial housings (23, 24, 25) jointly form the housing of the retarder (14) in the assembled state of the hydrodynamic retarder (14).

11. The drive train according to claim 10, **characterized in that** the partial housings (23, 24, 25) which are associated with the modules (15, 16, 18, 26, 27) are detachably connected to each other.

## Revendications

1. Procédé pour modifier ou fabriquer une chaîne de transmission (1) conçue pour recevoir un frein à régime continu (2) pour ralentir des roues motrices disposées dans la chaîne de transmission (1), quand la chaîne de transmission (1) est réalisée comme une chaîne de transmission de véhicule à moteur, ou pour ralentir un arbre de la chaîne de transmission (1) solidaire en rotation d'un groupe quand la chaîne de transmission (1) est réalisée comme une partie d'une installation stationnaire,
1.1 dans lequel le frein à régime continu (2) est disposé sur le côté mené de sortie (5) d'un engrenage dans la branche principale (3) de la chaîne de transmission (1) entre un engrenage (4) et les roues motrices, dans la réalisation comme chaîne de transmission de véhicule à moteur, ou entre l'engrenage (4) et le groupe de l'installation stationnaire à freiner, et se trouve en liaison motrice avec un arbre de sortie d'engrenage (6) de l'engrenage ou peut être amené dans une telle liaison,
**caractérisé en ce que**
1.2 la chaîne de transmission (1) est munie à la place du frein à régime continu (2) d'un retardateur hydrodynamique (14) comprenant un module de sortie secondaire (15) et un composant hydrodynamique (9) avec un rotor (11) à aubes pouvant être entraîné par l'intermédiaire d'un arbre d'entrée (10) et un stator (12) à aubes, qui délimitent ensemble un espace de travail (13) toroïdal rempli ou pouvant être rempli de fluide de travail et pouvant être vidé, pour transmettre un couple de rotation du rotor (11) au stator (12) par des moyens hydrodynamiques,
1.3 l'arbre d'entrée (10) du composant hydrodynamique (9) étant relié au module de sortie secondaire (15) de telle manière que le composant hydrodynamique (9) soit amené en liaison motrice avec l'arbre de sortie d'engrenage (6) et forme une branche secondaire de la chaîne de transmission (1) pour freiner indirectement les roues motrices ou l'arbre du groupe quand le composant hydrodynamique (9) est activé.

2. Procédé selon la revendication 1, **caractérisé en ce que** le retardateur hydrodynamique (14) remplace le frein à régime continu (2) dans sa fonction et le frein à régime continu (2) est en particulier supprimé de la chaîne de transmission (1).

3. Procédé selon l'une des revendications 1 ou 2, **caractérisé en ce que** le retardateur hydrodynamique (14) est dimensionné en ce qui concerne ses performances de freinage et/ou de dissipation thermique de telle manière que celles-ci correspondent pour l'essentiel aux performances correspondantes du frein à régime continu (2) qu'il remplace.

4. Procédé selon l'une des revendications 1 à 3, **caractérisé en ce qu'**une adaptation de la puissance du retardateur hydrodynamique (14) à la puissance du frein à régime continu (2) qu'il remplace ou à une autre consigne de puissance est réalisée par la modification de la multiplication et/ou de la géométrie d'une paire de roues dentées (21, 22) prévue dans le module de sortie secondaire (15).

5. Procédé selon l'une des revendications 1 à 4, **caractérisé en ce que** les composants présents, en particulier les lignes pneumatiques, hydrauliques et/ou électriques, les soupapes et/ou les unités de commande, prévus pour actionner le frein à régime continu (2) remplacé sont utilisés pour alimenter et/ou commander le retardateur hydrodynamique (14).

6. Chaîne de transmission, en particulier chaîne de transmission de véhicule à moteur, avec un moteur d'entraînement (28) et un engrenage (4) monté après le moteur d'entraînement (28), dans laquelle l'engrenage (4) porte sur son côté de sortie d'engrenage (5) un arbre de sortie d'engrenage (6) pour la transmission de la puissance d'entraînement du moteur d'entraînement (28) à des roues motrices (32) ou à un groupe monté en aval, et l'arbre de sortie d'engrenage (6) dépasse d'un carter d'engrenage (30) entourant l'engrenage (4),
**caractérisée en ce que**
6.1 il est prévu disposé en dehors du carter d'engrenage (30) un retardateur hydrodynamique (14) de construction modulaire, comprenant un module hydrodynamique (16) avec un composant hydrodynamique (9), comprenant un rotor (11) à aubes et un stator (12) à aubes, qui délimitent un espace de travail (13) toroïdal pouvant être rempli de fluide de travail et pouvant être vidé dans lequel une circulation en circuit (17) hydrodynamique peut être établie pour transmettre un couple de rotation du rotor (11) au stator (12), le rotor (11) étant porté par un arbre d'entrée (10) du composant hydrodynamique (9),
6.2 un module de sortie secondaire (15) étant regroupé dans un carter commun avec le module hydrodynamique (16) et le module de sortie secondaire (15) présentant une entrée de sortie secondaire avec une roue dentée (21) et une sortie de sortie secondaire avec un pignon (22), laquelle sortie de sortie secondaire est formée par l'arbre d'entrée (10) du composant hydrodynamique (9) ou se trouve en liaison motrice avec celui-ci, et
6.3 l'entrée de sortie secondaire étant raccordée de façon solidaire en rotation à l'arbre de sortie d'engrenage (6) ou à un arbre disposé après l'arbre de sortie d'engrenage (6), en particulier un arbre articulé (31).

7. Chaîne de transmission selon la revendication 6, **caractérisée en ce que** l'entrée de sortie secondaire est formée par une douille (20) qui est reliée à l'arbre de sortie d'engrenage (6) de l'engrenage (4) et qui porte la roue dentée (21) ou forme une roue dentée, et l'arbre d'entrée (10) du composant hydrodynamique (9) porte le pignon (22) ou forme un pignon qui engrène avec la roue dentée (21) de la douille (20), la roue dentée (21) et le pignon (22) étant en particulier dimensionnés de telle sorte qu'il se crée une multiplication à grande vitesse.

8. Chaîne de transmission selon l'une des revendications 6 ou 7, **caractérisée en ce que** l'entrée de sortie secondaire et l'arbre d'entrée (10) du composant hydrodynamique (9) sont parallèles l'une à l'autre.

9. Chaîne de transmission selon l'une des revendications 6 à 8, **caractérisée en ce qu'**un module de fluide de travail (18) avec un réservoir de fluide de travail (19) et/ou un échangeur de chaleur pour évacuer la chaleur du module de travail sont regroupés dans le carter commun du retardateur avec le module de sortie secondaire (15) et le module hydrodynamique (16), le module de fluide de travail (18) étant en particulier composé d'un module de réservoir de fluide de travail (26) comprenant le réservoir de fluide de travail (19) et d'un module d'échangeur de chaleur (27) comprenant l'échangeur de chaleur.

10. Chaîne de transmission selon l'une des revendications 6 à 9, **caractérisée en ce que** chaque module (15, 16, 18, 26, 27) ou plusieurs modules (15, 16, 18, 26, 27) réunis comprennent un carter partiel (23, 24, 25), chacun des carters partiels (23, 24, 25) renfermant au moins une partie du module (15, 16, 18, 26, 27) correspondant, en particulier dans le sens axial et/ou le sens de la circonférence du retardateur hydrodynamique (14) et, dans l'état assemblé du retardateur hydrodynamique (14), les différents carters partiels (23, 24, 25) forment ensemble le carter du retardateur (14).

11. Chaîne de transmission selon la revendication 10, **caractérisée en ce que** les carters partiels (23, 24, 25) associés aux modules (15, 16, 18, 26, 27) sont reliés les uns aux autres de façon amovible.
